# EUROPÄISCHE PATENTSCHRIFT

(11) **EP 1 211 941 B1**
(45) Veröffentlichungstag und Bekanntmachung des Hinweises auf die Patenterteilung: **26.11.2003**
(21) Anmeldenummer: 00962323.2
(22) Anmeldetag: 16.08.2000
(51) Int. Cl.: A01N 47/38, A01N 25/32

(54) **SELEKTIVE HERBIZIDE AUF BASIS EINES SUBSTITUIERTEN PHENYLSULFONYLAMINOCARBONYLTRIAZOLINONS UND SAFENERN**
SELECTIVE HERBICIDES ON THE BASIS OF A SUBSTITUTED PHENYLSULFONYLAMINOCARBONYLTRIAZOLINONE AND SAFENERS
HERBICIDES SELECTIFS A BASE D'UNE PHENYLSULFONYLAMINOCARBONYLTRIAZOLINONE SUBSTITUEE ET DE PHYTOPROTECTEURS

(30) Priorität: 27.08.1999 DE 19940860
(43) Veröffentlichungstag der Anmeldung: 12.06.2002
(73) Patentinhaber: Bayer CropScience AG, 40789 Monheim (DE)
(72) Erfinder: FEUCHT, Dieter, 40789 Monheim (DE); DAHMEN, Peter, 41470 Neuss (DE); DREWES, Mark, Wilhelm, 40764 Langenfeld (DE); KRAUSKOPF, Birgit, Leawood, KS 66224 (US); KREMER, Mathias, 51399 Burscheid (DE); PONTZEN, Rolf, 42799 Leichlingen (DE); SANTEL, Hans-Joachim, 51371 Leverkusen (DE); WELLMANN, Arndt, 51519 Odenthal (DE); KLUTH, Joachim, 40764 Langenfeld (DE); MÜLLER, Klaus-Helmut, 40593 Düsseldorf (DE)
(86) Internationale Anmeldenummer: EP0007982
(87) Internationale Veröffentlichungsnummer: WO01015533

(56) Entgegenhaltungen:
- EP-A- 0 112 799
- EP-A- 0 507 171
- EP-A- 0 931 456
- WO-A-99/57983
- DE-A- 19 638 887
- SCOGGAN, A. C. ET AL: "BAY MKH 6561: a new herbicide for grass and broadleaf weed control in cereals" BRIGHTON CONF.--WEEDS (1999), (VOL. 1), 93-98 , XP000978388
- FEUCHT D ET AL: "BAY MKH 6561 - a new selective herbicide for grass control in wheat, rye and triticale." PROC.BR.CROP PROT.CONF.WEEDS (1999, VOL.1, 53-58) 2 FIG. 4 TAB. 1 REF. CODEN: PBCWDF, XP000097839
- BELL C E: "Field evaluation of MKH - 6561 for Phalaris minor control in durum wheat." PROC.BR.CROP PROT.CONF.WEEDS (1999, VOL.1, 211-16) 5 TAB. 10 REF. CODEN: PBCWDF, XP000978387 Univ.California

## Beschreibung

Die Erfindung betrifft neue selektiv-herbizide Wirkstoffkombinationen, die 2-(2-Methoxycarbonyl-phenylsulfonylaminocarbonyl)-4-methyl-5-propoxy-2,4-dihydro-3H-1,2,4-triazol-3-on und/oder dessen Salze, insbesondere dessen Natriumsalz, einerseits und zumindest eine die Kulturpflanzen-Verträglichkeit verbessernde Verbindung andererseits enthalten und mit besonders gutem Erfolg zur selektiven Unkrautbekämpfung in verschiedenen Nutzpflanzenkulturen verwendet werden können.

Substituierte Phenylsulfonylaminocarbonyl-triazolinone sind als wirksame Herbizide bekannt (vgl. z.B. EP-A 507 171). Die Wirkung dieser Verbindungen und/oder ihre Verträglichkeit gegenüber Kulturpflanzen sind jedoch nicht unter allen Bedingungen ganz zufriedenstellend.

Weiter sind Wirkstoffkombinationen aus substituierten Phenylsulfonylaminocarbonyltriazolinonen und anderen herbizid wirksamen Verbindungen zum Erzielen einer synergistischen Wirkung (vgl. DE-A 196 388 87) bekannt geworden. Auch bei diesen Kombinationsprodukten sind jedoch die Anwendungseigenschaften nicht unter allen Bedingungen ganz befriedigend. Kombinationen von 2-(2-Trifluormethoxy-phenylsulfonylaminocarbonyl)-4-methyl-5-methoxy-2,4-dihydro-3H-1,2,4-triazolin-3-on mit einigen Safenen wurden zudem in der EP-A 931 456 beschrieben.

Überraschenderweise wurde nun gefunden, dass 2-(2-Methoxycarbonyl-phenylsulfonylaminocarbonyl)-4-methyl-5-propoxy-2,4-dihydro-3H-1,2,4-triazol-3-on und/oder dessen Salze bei gemeinsamer Anwendung mit der weiter unten beschriebenen, die Kulturpflanzen-Verträglichkeit verbessernden Verbindung ausgesprochen gut die Schädigung der Kulturpflanzen verhindern und besonders vorteilhaft als breit wirksames Kombinationspräparat zur selektiven Bekämpfung von Unkräutern in Nutzpflanzenkulturen, wie z.B. in Getreide, verwendet werden können.

Gegenstand der Erfindung sind selektiv-herbizide Mittel, gekennzeichnet durch einen wirksamen Gehalt an einer Wirkstoffkombination umfassend
(a) 2-(2-Methoxycarbonyl-phenylsulfonylaminocarbonyl)-4-methyl-5-propoxy-2,4-dihydro-3H-1,2,4-triazol-3-on der Formel (I) 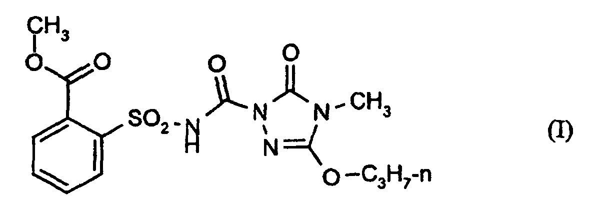 und/oder ein oder mehrere Salze der Verbindung der Formel (I), insbesondere das Natriumsalz,
   und
(b) die Verbindung Diethyl-1-(2,4-dichlorophenyl)-4,5-dihydro-5-methyl-1H-pyrazole-3,5-dicarboxylate (Mefenpyr-diethyl),
wobei im allgemeinen auf 1 Gewichtsteil des Wirkstoffs 2-(2-Methoxycarbonyl-phenylsulfonylaminocarbonyl)-4-methyl-5-propoxy-2,4-dihydro-3H-1,2,4-triazol-3-on der Formel (I) oder seinen Salzen 0,001 bis 1000 Gewichtsteile der oben genannten Verbindung der Komponente (b) entfallen.

Die Salze der Verbindung der Formel (I) sind bevorzugt die Natrium-, Kalium-, Ammonium-, Methylammonium-, Ethylammonium-, n- oder i-Propylammonium-, n-, i-, s- oder t-Butylammonium-, Dimethylammonium-, Diethylammonium-, Di-n-propylammonium-, Di-i-propylammonium-, Di-n-butyl-ammonium-, Di-i-butylammonium-, Di-s-butylammonium-, Trimethylammonium-, Triethylammonium-, Tripropylammonium-, Tributylammonium-, Trimethylsulfonium- und Triethylsulfonium-Salze.

Es wurde nun überraschend gefunden, dass die oben definierten Wirkstoffkombinationen aus 2-(2-Methoxycarbonyl-phenylsulfonylaminocarbonyl)-4-methyl-5-propoxy-2,4-dihydro-3H-1,2,4-triazol-3-on der Formel (I) bzw. seinen Salzen und der Safener/Antidot aus der Komponente (b) bei sehr guter Nutzpflanzen-Verträglichkeit eine besonders hohe herbizide Wirksamkeit aufweisen und in verschiedenen Kulturen, insbesondere in Getreide, vor allem Weizen, aber auch in Soja, Kartoffeln, Mais und Reis zur selektiven Unkrautbekämpfung verwendet werden können.

Dabei ist es als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführte Verbindung der Komponente (b) geeignet ist, die schädigende Wirkung von 2-(2-Methoxycarbonyl-phenylsulfonylaminocarbonyl)-4-methyl-5-propoxy-2,4-dihydro-3H-1,2,4-triazol-3-on und seinen Salzen, insbesondere seines Natriumsalzes, auf die Kulturpflanzen annähernd vollständig aufzuheben, ohne dabei die herbizide Wirksamkeit gegenüber den Unkräutern zu beeinträchtigen.

Hervorgehoben sei hierbei die besonders vorteilhafte Wirkung der Kombination mit der Komponente (b), insbesondere hinsichtlich der Schonung von Getreidepflanzen, wie z.B. Weizen, Gerste und Roggen, als Kulturpflanzen.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die Kulturpflanzen sind dabei erfindungsgemäß alle Pflanzen und Pflanzensorten einschließlich transgener Pflanzen und Pflanzensorten.

Der vorteilhafte Effekt der Kulturpflanzenverträglichkeit der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) oder seinen Salzen 0,001 bis 1000 Gewichtsteile, vorzugsweise 0,01 bis 100 Gewichtsteile und besonders bevorzugt 0,1 bis 10 Gewichtsteile einer der oben unter (b) genannten, die Kulturpflanzen Verträglichkeit verbessernden Verbindung.

Die Wirkstoffe bzw. Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen einschließlich der safenden Wirkstoffe, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflaufverfahren, kann es ferner vorteilhaft sein, in die Formulierungen als weitere Zusatzstoffe pflanzenverträgliche mineralische oder vegetabilische Öle (z.B. das Handelspräparat "Oleo® DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,05 und 5 kg pro ha, vorzugsweise zwischen 0,05 und 2 kg pro ha, besonders bevorzugt zwischen 0,1 und 1,0 kg pro ha.

Die erfindungsgemäßen Wirkstoffkombinationen können vor und nach dem Auflaufen der Pflanzen appliziert werden, also im Vorauflauf und Nachauflauf-Verfahren.

### Anwendungsbeispiele:

Es wurden übliche Formulierungen der involvierten Wirkstoffe benutzt. Dabei wurde das Natriumsalz der Verbindung der Formel (I) als 70 WG bzw. 70 WP, das Mefenpyr-diethyl als 100 EC als selbst hergestellte Wirkstoff-Laborformulierung appliziert. Aus den Wirkstoffen und gegebenenfalls den Safenern wurde eine wässrige Spritzbrühe mit 0,1 % des Additivs Renex-36 hergestellt.

### Beispiel A

### Post-emergence-Test

Mit der Wirkstoffzubereitung spritzt man Testpflanzen, die in 10 x 10 cm Töpfen aufgezogen wurden (Aufzuchtsmedium: Erde oder Vermiculte), in der Weise, dass die jeweils gewünschten Wirkstoffmengen pro Flächeneinheit ausgebracht werden. Die Konzentration der Spritzbrühe wird so gewählt, dass in 5001 Wasser/ha die jeweils gewünschten Wirkstoffmengen ausgebracht werden.

Nach ca. 18 Tagen wird der Schädigungsgrad der Kulturpflanzen bonitiert in % Schädigung im Vergleich zur Entwicklung der unbehandelten Kontrolle.

Es bedeuten:
0 % = keine Schädigung (wie unbehandelte Kontrolle)
100 % = totale Vernichtung/Schädigung

Wirkstoffe, Aufwandmengen, Testpflanzen und Resultate gehen aus den nachfolgenden Tabellen hervor, wobei die in den Tabellen verwendeten Bezeichnungen die folgende Bedeutung haben:
Weizen = Weizen der Sorte Orestis
Gerste = Gerste der Sorte Coronar
a.i. = active ingredient = Wirkstoff/Safener
Natriumsalz der Verbindung (I) =

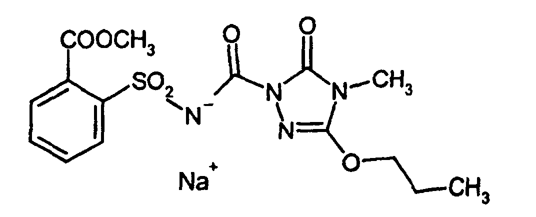

**Tabelle A2**

| **post emergence Test/ Gewächshaus** | | |
|---|---|---|
| Wirkstoff(e) | Aufwandmenge (g a.i./ha) | Schädigung Weizen [in %] |
| Natriumsalz der Verbindung der Formel (I) | 250 | 50 |
| | 125 | 30 |
| | 60 | 20 |
| Natriumsalz der Verbindung der Formel (I) + Mefenpyr-diethyl | 250 + 250 | 20 |
| | 125 + 125 | 0 |
| | 60+60 | 0 |

**Tabelle A3**

| **post emergence Test/ Gewächshaus** | | |
|---|---|---|
| Wirkstoff(e) | Aufwandmenge (g a.i./ha) | Schädigung Weizen [in %] |
| Natriumsalz der Verbindung der Formel (I) | 125 | 50 |
| | 60 | 10 |
| | 30 | 5 |
| Natriumsalz der Verbindung der Formel (I) + Mefenpyr-diethyl | 125 + 125 | 10 |
| | 60 + 60 | 5 |
| | 30 + 30 | 0 |

**Tabelle A4**

| **post emergence Test/ Gewächshaus** | | |
|---|---|---|
| Wirkstoff(e) | Aufwandmenge (g a.i./ha) | Schädigung Weizen [in %] |
| Natriumsalz der Verbindung der Formel (I) | 125 | 40 |
| | 60 | 30 |
| Natriumsalz der Verbindung der Formel (I) + Mefenpyr-diethyl | 125 + 250 | 10 |
| | 60 + 250 | 0 |

**Tabelle A5**

| **post emergence Test/ Gewächshaus** | | |
|---|---|---|
| Wirkstoff(e) | Aufwandmenge (g a.i./ha) | Schädigung Gerste [in %] |
| Natriumsalz der Verbindung der Formel (I) | 60 | 70 |
| | 30 | 70 |
| | 15 | 50 |
| Natriumsalz der Verbindung der Formel (I) + Mefenpyr-diethyl | 60 + 60 | 60 |
| | 30 + 30 | 50 |
| | 15 + 15 | 30 |

**Tabelle A6**

| **post emergence Test/ Gewächshaus** | | |
|---|---|---|
| Wirkstoff(e) | Aufwandmenge (g a.i./ha) | Schädigung Gerste [in %] |
| Natriumsalz der Verbindung der Formel (I) | 60 | 60 |
| | 30 | 60 |
| | 15 | 50 |
| | 8 | 50 |
| Natriumsalz der Verbindung der Formel (I) + Mefenpyr-diethyl | 60 + 200 | 50 |
| | 30 + 200 | 30 |
| | 15+200 | 30 |
| | 8+200 | 5 |
| | 60 + 50 | 60 |
| | 30 + 50 | 40 |
| | 15 + 50 | 30 |
| | 8+ 50 | 10 |

## Patentansprüche

1. Mittel, enthaltend einen wirksamen Gehalt an einer Wirkstoffkombination umfassend
(a) 2-(2-Methoxycarbonyl-phenylsulfonylaminocarbonyl)-4-methyl-5-propoxy-2,4-dihydro-3H-1,2,4-triazol-3-on der Formel (I) 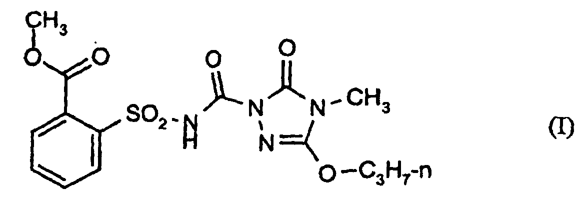 und/oder ein oder mehrere Salze der Verbindung der Formel (I) und
(b) die Verbindung Diethyl-1-(2,4-dichlorophenyl)-4,5-dihydro-5-methyl-1H-pyrazole-3,5-dicarboxylate (Mefenpyr-diethyl),
wobei im allgemeinen auf 1 Gewichtsteil des Wirkstoffs 2-(2-Methoxycarbonyl-phenylsulfonylaminocarbonyl)-4-methyl-5-propoxy-2,4-dihydro-3H-1,2,4-triazol-3-on der Formel (I) oder seinen Salzen 0,001 bis 1000 Gewichtsteile der oben genannten Verbindung der Komponente (b) entfallen.

2. Verwendung eines Mittels gemäß Anspruch 1 zur Bekämpfung von unerwünschtem Pflanzenwuchs.

3. Verfahren zur Bekämpfung von Unkräutern, **dadurch gekennzeichnet, dass** man ein Mittel gemäß Anspruch 1 auf die unerwünschten Pflanzen und/oder ihren Lebensraum einwirken lässt.

4. Verfahren zur Herstellung eines herbiziden Mittels, **dadurch gekennzeichnet, dass** man ein Mittel gemäß Anspruch 1 mit oberflächenaktiven Mitteln und/oder Streckmitteln vermischt.

## Claims

1. Composition, comprising an effective amount of an active compound combination comprising
(a) 2-(2-methoxycarbonyl-phenylsulphonylaminocarbonyl)-4-methyl-5-propoxy-2,4-dihydro-3H-1,2,4-triazol-3-one of the formula (I) 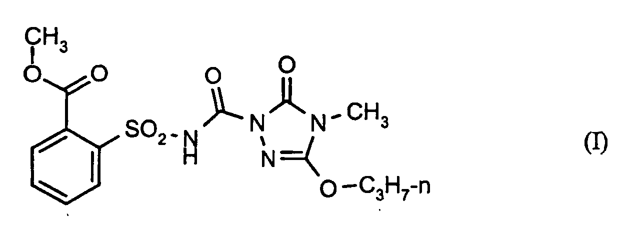 and/or one or more salts of the compound of the formula (I) and
(b) the compound diethyl 1-(2,4-dichlorophenyl)-4,5-dihydro-5-methyl-1H-pyrazole-3,5-dicarboxylate (mefenpyr-diethyl),
where generally from 0.001 to 1000 parts by weight of the abovementioned compound of component (b) are present per part by weight of the active compound 2-(2-methoxycarbonyl-phenylsulphonylaminocarbonyl)-4-methyl-5-propoxy-2,4-dihydro-3H-1,2,4-triazol-3-one of the formula (I) or its salts.

2. Use of a composition according to Claim 1 for controlling undesirable vegetation.

3. Method for controlling weeds, **characterized in that** a composition according to Claim 1 is allowed to act on the undesirable plants and/or their habitat.

4. Process for preparing a herbicidal composition, **characterized in that** a composition according to Claim 1 is mixed with surfactants and/or extenders.

## Revendications

1. Produit contenant un taux actif d'une association de principes actifs comprenant
(a) du 2-(2-méthoxycarbonylphénylsulfonylaminocarbonyl)-4-méthyl-5-propoxy-2,4-dihydro-3H-1,2,4-triazol-3-one de formule (I) 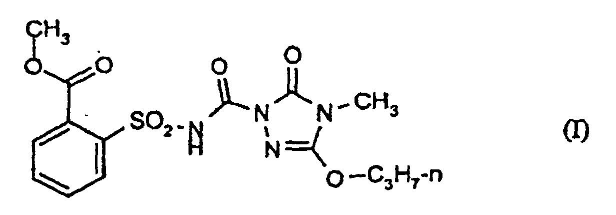 et/ou un plusieurs sels du composé de formule (I) et
(b) le composé diéthyl-1-(2,4-dichlorophényl)-4,5-dihydro-5-méthyl-1H-pyrazole-3,5-dicarboxylate (méfenpyr-diéthyle),
0,001 à 1000 parts en poids du composé précité du composant (b) étant en général utilisées pour 1 part en poids du principe actif 2-(2-méthoxycarbonylphénylsulfonylaminocarbonyl)-4-méthyl-5-propoxy-2,4-dihydro-3H-1,2,4-triazol-3-one de formule (I) ou de ses sels.

2. Mise en oeuvre d'un produit selon la revendication 1 pour la lutte contre la végétation indésirée.

3. Procédé de lutte contre les mauvaises herbes, **caractérisé en ce qu'**un produit selon la revendication 1 est appliqué sur les plantes indésirées et/ou leur milieu.

4. Procédé de préparation d'un produit herbicide **caractérisé en ce qu'**un produit selon la revendication 1 est mélangé avec des produits tensio-actifs et/ou des diluants.
